# EUROPEAN PATENT APPLICATION

(11) **EP 1 717 263 A1**
(43) Date of publication of application: **02.11.2006**
(21) Application number: 05704159.2
(22) Date of filing: 20.01.2005
(51) Int. Cl.: C08J 3/12

(54) **A METHOD FOR PRODUCING FINE PARTICLES USING METHOD OF RAPID EXPANSION INTO POOR SOLVENT FROM SUPERCRITICAL FLUID**

(30) Priority: 28.01.2004 JP 2004019392
(71) Applicant: Japan Science and Technology Agency, Kawaguchi-shi, Saitama 332-0012 (JP)
(72) Inventor: MISHIMA, Kenji, Fukuoka-shi, Fukuoka 814-0121 (JP); MATSUYAMA, Kiyoshi, Fukuoka-shi, Fukuoka 811-1345 (JP)
(74) Representative: Koepe, Gerd L.
(86) International application number: PCT/JP2005/001049
(87) International publication number: WO 2005/073285

(57) **Abstract**

A method for producing high-molecular weight microspheres of the present invention includes the steps of dissolving or dispersing a high-molecular material in a high pressure fluid containing a supercritical fluid and an entrainer, and spraying the resultant high pressure fluid into a poor solvent to cause rapid expansion. According to the production method, high-molecular weight microspheres or coated microspheres whose average particle size can be controlled can be produced.

## Description

### Technical Field

The present invention relates to a method for producing high-molecular weight microspheres. More specifically, the present invention relates to a method for producing microspheres whose average particle size can be controlled by using a high pressure fluid and a poor solvent.

### Background Art

Microspheres have been conventionally produced from high-molecular solid raw material such as organic high-molecular compounds such as acrylic resins, polyester resins, epoxy resins or mixture thereof by a liquid phase polymerization process or the like. However, harmful organic solvents or surfactants are used, which causes a burden on the environment, and it is difficult to control the particle size.

It is known that supercritical carbon dioxide has a poor solubility for a high-molecular substance, which is a disadvantage of the supercritical carbon dioxide. However, based on thermodynamical examination, the inventors of the present invention have found that the solubility of supercritical carbon dioxide can be improved by a factor of 1000 by a specific coexistence effect of a poor solvent. Using this technique, a method for producing high-molecular weight microspheres for coating by using ethanol or the like, which is inherently a poor solvent with respect to a certain type of high-molecular substances, as an entrainer to increase the solubility of a high-molecular substance specifically only when a supercritical fluid is mixed with the entrainer, and further by subjecting this mixture to reduced pressure has been developed (see Japanese Laid-Open Patent Publication Nos. 8-104830 and 8-113652). In this method, the supercritical fluid is separated from the entrainer in the course of rapid expansion of the mixture by reducing the pressure in the air, so that the solubility of the high-molecular substance is decreased rapidly and microspheres are produced. Furthermore, since the entrainer itself is volatile and is a poor solvent with respect to high-molecular substances, the extent of adherence between the high-molecular weight microspheres produced in the rapid expansion process is comparatively small.

Furthermore, the inventors of the present invention also have developed a method of coating a core substance such as a protein, a pharmaceutical agent, organic microspheres, inorganic microspheres, a liquid substance and their mixture, with a high-molecular organic compound such as acrylic resin, an organic-inorganic compound or a mixture of these compounds and other compounds, utilizing the above-described specific coexistence effect of a poor solvent (see Japanese Laid-Open Patent Publication No. 11-197494). More specifically, substances as described above are dissolved in a high pressure fluid containing a supercritical fluid and an entrainer, and this mixture is rapidly expanded into the air, so that coated microspheres are produced.

However, in all of the above-described methods (Japanese Laid-Open Patent Publication Nos. 8-104830, 8-113652 and 11-197494), the control of the average particle size of the produced microspheres was not taken into consideration. In particular, the microspheres obtained by adding and dissolving a high-molecular substance in a mixture of a supercritical fluid and an entrainer and then rapidly expanding into the air do not have controlled shapes nor dispersibility. Therefore, the microspheres adhere to each other due to the entrainer that remains after the production of the microspheres, so that the shape and the average particle size of the microspheres cannot sufficiently be controlled. Although there is a report that the particle size of the microspheres can be adjusted by the state of the fluid in a nozzle used during rapid expansion into the air ("Review of High Pressure Science and Technology" Kunio Nagahama and Liu, Guo-Tang, 1996, vol. 5, No. 1, pp. 50-56), since the rapid expansion occurs in the air, the problem of adhesion between the microspheres due to the remaining entrainer cannot be solved.

In order to obtain metal or semiconductor nanoparticles, methods of rapidly expanding the supercritical solution, in which a raw material is dissolved, not into air, but into a solution of a poor solvent, have been reported (Sun Y.-P. et al., Ind. Eng. Chem. Res., 2000, vol. 39, No. 12, pp. 4663-4669; Mediani M. J. et al., J. Phys. Chem. B, 2002, vol. 106, No. 43, pp. 11178-11182; and Mediani M. J. et al., ACS Symp. Ser. (Am. Chem. Soc.), 2003, pp. 309-323). In these methods, the raw material dissolved in the supercritical solution is a metal salt, and this is sprayed into a solvent containing a reducing agent to cause a reductive reaction so that metal nanoparticles are precipitated. Furthermore, since mere rapid expansion causes aggregation of the nanoparticles to the micron size (Sun Y.-P. et al., op. cit.), a stabilization agent for polymer such as polyvinyl pyrrolidone (PVP) or bovine serum albumin (BSA) is added to the poor solvent in order to assist dispersion of particles for stabilization.

In order to obtain a dispersion of a drug, a method of rapidly expanding a supercritical solution, in which a raw material is dissolved, not into air, but into water as a poor solvent, has been reported (Young T. J. et al., Biotechnol. Prog., 2000, vol. 16, No. 3, pp. 402-407). In this article, a stably dispersed aqueous solution of a drug (cyclosporin) can be obtained by performing rapid expansion into water as a poor solvent. The crystal growth of microspheres produced is suppressed, compared with a method of rapid expansion into air. As the result, the purpose of obtaining microspheres having a small particle size is achieved. Since this method is further aimed at obtaining a stable dispersion, it is necessary to add a surfactant such as Tween 80.

### Disclosure of Invention

It is an object of the present invention to provide a method for producing spherical high-molecular weight microspheres whose particle shape and average particle size can be controlled.

The present invention is based on the following findings: A high-molecular substance is dissolved in a high pressure fluid based on a specific coexistence effect of a poor solvent as described above; The solution is sprayed in the poor solvent for rapid expansion to cause rapid supersaturation and precipitation, which enables the production of uniformly dispersed high-molecular weight microspheres. In the present invention, it is found that the poor solvent to which the substance is sprayed does not necessarily contain a stabilization agent for polymer such as PVP, BSA or a surfactant such as Tween 80. Furthermore, in the present invention, it is possible to control the average particle size of the obtained high-molecular weight microspheres by varying the temperature, pressure or type of the poor solvent. Furthermore, it is also possible to control the thickness of the high-molecular coating to microspheres.

The present invention provides a method for producing high-molecular weight microspheres comprising:
dissolving or dispersing a high-molecular material in a high pressure fluid containing a supercritical fluid and an entrainer, and
spraying the resultant high pressure fluid into a poor solvent to cause rapid expansion.

In a preferred embodiment, the poor solvent is at least one selected from the group consisting of water, methanol, ethanol, propanol, acetone, liquid nitrogen and a mixture thereof.

In a more preferred embodiment, the supercritical fluid is selected from the group consisting of carbon dioxide, ammonia, methane, ethane, ethylene and butane.

In another preferred embodiment, the entrainer is an organic solvent that is liquid at ordinary temperature.

In a more preferred embodiment, in the dissolving or dispersing step, at least one of the pressure of the high pressure fluid, the temperature of the high pressure fluid, the amount of the entrainer and the amount of the high-molecular material is controlled.

In a preferred embodiment, in the rapid expansion step, at least one of the pressure, the temperature, and the type of the poor solvent is controlled.

In another preferred embodiment, in the dissolving or dispersing step, a core substance is further dissolved or dispersed.

In a more preferred embodiment, the high-molecular weight microspheres are spherical.

In a further preferred embodiment, in the rapid expansion step, the entrainer is efficiently removed from the surface of the high-molecular weight microspheres.

In the present invention, a high pressure fluid containing an entrainer in which a high-molecular substance is dissolved is rapidly expanded into a poor solvent, so that the entrainer, which is included in the high pressure fluid and causes adhesion of high-molecular weight microspheres, is diffused in the poor solvent. Therefore, it is possible to remove the entrainer from the high-molecular weight microspheres more easily than in the case of rapid expansion into air. Furthermore, when fine droplets (precursor of high-molecular weight microspheres) of a high-molecular substance solution produced by rapid expansion are dispersed in the poor solvent, surface tension acts on the droplets so that spherical particles are effectively formed. Therefore, according to the method of the present invention, high-molecular weight microspheres having good dispersibility can be produced stably. Moreover, according to the method of the present invention, the average particle size of the produced high-molecular weight microspheres and the thickness of high-molecular coating of the microspheres can be controlled quantitatively.

### Brief Description of Drawings

Fig. 1 is a schematic view of an example of an apparatus that can be used to practice the method of the present invention.
Fig. 2 is a scanning electron microphotograph of polylactic acid microspheres obtained by the method of the present invention (Example 1).
Fig. 3 is a graph showing the particle size distribution of polylactic acid microspheres obtained by the method of the present invention (Example 1).
Fig. 4 is a graph showing the relationship between the pressure change and the average particle size of polylactic acid microspheres obtained by the method of the present invention (Example 2).
Fig. 5 is a graph showing the relationship between the supply amount of the polylactic acid charged and the average particle size of the microspheres (Example 3).
Fig. 6 is a graph showing the relationship between the amount of the polyethylene glycol added, which is a coating material, and the average particle size of coated microspheres (Example 4).
Fig. 7 is a graph showing the relationship between the distance from the nozzle to the water surface and the average particle size of the polylactic acid microspheres (Example 6).

### Best Mode for Carrying Out the Invention

A method for producing high-molecular weight microspheres of the present invention includes the steps of dissolving or dispersing a high-molecular material in a high pressure fluid containing a supercritical fluid and an entrainer, and spraying the resultant high pressure fluid into a poor solvent to cause rapid expansion. In the present invention, high-molecular weight microspheres are stably produced by dissolving a high-molecular material or the like that is a raw material of microspheres in a high pressure fluid containing a supercritical fluid and an entrainer, and rapidly spraying the high pressure fluid into a poor solvent to cause supersaturation and precipitation.

In the present invention, "supercritical fluid" refers to a fluid at a temperature higher than the critical temperature and under a pressure higher than the critical pressure, but may include a subcritical fluid. There is no particular limitation on the chemical species of such a supercritical fluid. For example, an organic gas in a gaseous state at ordinary temperature can be used. Preferable examples of the chemical species include carbon dioxide, carbon monoxide, ammonia, methane, ethane, propane, ethylene, and butane, more preferable examples include carbon dioxide, ammonia, methane, ethane, ethylene, and butane, and even more preferable examples include carbon dioxide and ethylene.

In the present invention, "poor solvent" refers to a solvent that has an ability of dissolving a high-molecular material (which will be described in detail later), which is a raw material of targeted microspheres or a raw material for coating, but has a very low solubility thereto. Therefore, the poor solvent is selected as appropriate depending on the type of a high-molecular substance used. As such a poor solvent, polar solvents are preferable and solvents that are in a liquid state at ordinary temperature are more preferable. Examples thereof include water; lower alcohols such as methanol, ethanol, and propanol; acetone; and low-molecular weight solvents such as acetic acid. Alternatively, liquid nitrogen can be also used.

In the present invention, "entrainer" is generally selected from poor solvents to a high-molecular substance in use. The entrainer may be a solvent that is in a gaseous state at ordinary temperature. The entrainer and the poor solvent used in the method of the present invention may be the same or different. As such an entrainer, low-molecular weight chemical substances such as carbon dioxide, methane, ethane, ethylene, propane, butane, acetic acid, water, methanol, ethanol, and ammonia are preferable.

In the present invention, "high pressure fluid" refers to a fluid under supercritical to critical pressure, and particularly refers to a fluid containing a supercritical fluid and an entrainer in the present invention. The high pressure fluid is generally in a gaseous state, but may include a substance in a liquid state.

In the present invention, "high-molecular weight microspheres" refer to microspheres made of a high-molecular material or microspheres coated with a high-molecular material. The "microspheres" refer to particles having a particle size of 1000 µm or less, preferably 500 µm or less, and more preferably 100 µm or less.

In the present invention, "high-molecular material" refers to a chemical species such as a high-molecular substance as a raw material of a targeted high-molecular weight microspheres or a raw material for coating. There is no particular limitation on the high-molecular material, and examples thereof include polyethylene, polypropylene, polybutene, polyethylene glycol, polypropylene glycol, polyvinyl alcohol, polyacrylamide, acrylic resins (polyacrylic acid and polyacrylic ester such as polymethyl methacrylate), phenol resins, epoxy resins, silicone resins, polyurethane, polyester, polybutadiene, polystyrene, polytetrafluoroethylene, polylactic acid, polycarbonate, polyacetal, polysiloxane, dextran, gelatin, starch, celluloses (such as cellulose butyrate, cellulose nitrate), saccharides, chitins, polypeptide and a high-molecular copolymer having these substances as constituents, and a mixture containing these substances.

There is no particular limitation on the core substance of the microspheres coated with a high-molecular material (hereinafter, which may be referred to as "coated microspheres"), and the core substance may be an organic or inorganic substance. In general, the core substances include substances used as a material of pharmaceuticals, food additives, copying/recording/display device, electronic elements or the like.

Examples of organic substances suitable as the core substance include proteins (e.g., tuberactinomycin, polymyxin, insulin, lysozyme, α-chymotrypsin, pepsin, ovalbumin, serum albumin, amylase, lipase, casein); medicinal ingredients (e.g., flavonoid such as baicalin, baicalein and quercetin; acetylsalicylic acid; acetaminophen; papaverine; antibiotics such as tetracycline; food additives and flavoring agents (e.g., curcumin, carotenoid, peppermint); and dyes and coating materials (e.g., leuco dyes, shellac, maleic resins, acrylic resins, carbon blacks).

As inorganic substances suitable as the core substances, any inorganic substances can be used, such as sulfides, silicon compounds, metals, metal compounds, alkali metal compounds, and alkaline earth compounds that are known as an electronic element to those skilled in the electronic equipment field. Examples of such an inorganic substance include sulfides (e.g., zinc sulfide, cadmium sulfide, sodium sulfide); silicon compounds (e.g., silicon dioxide); metals (e.g., iron, nickel, cobalt, stainless steel, copper, zinc); oxides (e.g., iron oxide, titanium oxide, tungsten oxide, nickel oxide, cobalt oxide, molybdenum oxide, manganese oxide, copper oxide, tantalum oxide); metal compounds (e.g., ferrite, MnFe₂O₄, MnFe₂O₄, ZnFe₂O₄, NiFe₂O₄ CuFe₂O₄).

In the method for producing high-molecular weight microspheres of the present invention, first, a high-molecular material and/or a core substance is dissolved or dispersed in a high pressure fluid containing a supercritical fluid and an entrainer. In this process, there is no particular limitation on the order of mixing the supercritical fluid, the entrainer, the high-molecular material, and/or the core substance. For example, a high pressure fluid containing a supercritical fluid and an entrainer is prepared in advance and then a high-molecular material and/or a core substance is dissolved or dispersed in the high pressure fluid. Alternatively, an entrainer and a high-molecular material and/or a core substance are mixed in advance, and then a supercritical fluid is added thereto so that the high-molecular material and/or the core material is dissolved or dispersed therein. In this case, the high-molecular material and/or the core material may be previously dissolved or dispersed in a small amount of entrainer.

In the present invention, the supercritical fluid is used generally in a ratio of 50 to 300 parts by weight, preferably about 100 to 200 parts by weight, with respect to about 3 parts by weight of the high-molecular material. The entrainer is used generally in a ratio of 5 to 100 parts by weight, preferably 20 to 30 parts by weight, with respect to 100 parts by weight of the supercritical fluid. The pressure in this process is preferably 7.2 to 30 MPa, and more preferably 15 to 25 MPa in order to perform rapid expansion of the supercritical fluid efficiently. The temperature is preferably 273 to 353 K, and more preferably 298 to 313 K.

Next, the high pressure fluid containing a high-molecular material and/or a core material is sprayed into the poor solvent to cause rapid expansion. In this process, there is no limitation on the manner in which the high pressure fluid is sprayed into the poor solvent. For example, the high pressure fluid previously mixed and dissolved under high pressure can be sprayed into the poor solvent using a nozzle or the like; or a surfactant or the like can be previously dissolved in the poor solvent to which microspheres are to be dispersed, and then the high pressure fluid can be blown to the poor solvent. The dispersibility of the high-molecular substance can be made better by changing the type, the pressure, and the temperature of the poor solvent as appropriate. In the present invention, it is preferable to use the poor solvent in a ratio of 20 to 200 ml with respect to 5 g of the high-molecular material in view of particle dispersibility. The temperature of the poor solvent is preferably 273 to 353 K, and more preferably 298 to 313 K. Alternatively, the particle size also can be controlled, for example, by adjusting the distance between the nozzle, which is a spraying means, and the liquid surface of the poor solvent. As the distance between the nozzle and the liquid surface is smaller, microspheres having a smaller particle size and a smaller particle size distribution can be obtained. It is particularly preferable that the nozzle is in contact with the liquid surface.

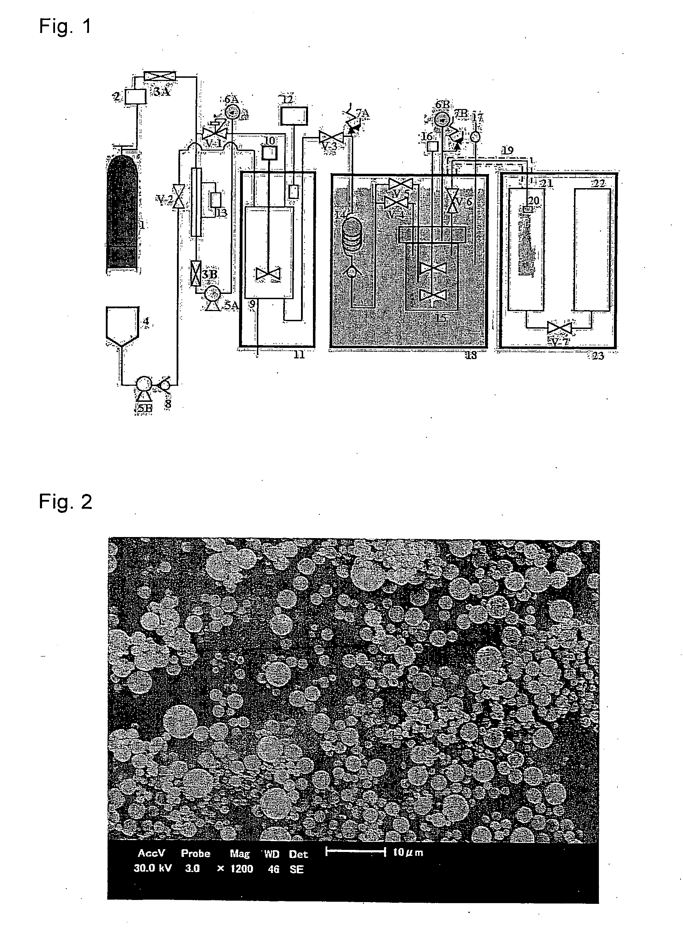

There is no particular limitation on the apparatus for producing microspheres that can be used in the method of the present invention, as long as it can perform the above-described processes. As an apparatus that can be used in the method for obtaining microspheres by spraying the high pressure fluid which was mixed and dissolved under high pressure into the poor solvent using a nozzle to cause rapid expansion, for example, an apparatus as shown in Fig. 1 can be used. The present invention will be more specifically described by taking the apparatus shown in Fig. 1 as an example.

The apparatus shown in Fig. 1 includes a pressure-rising portion that is from a cylinder 1 to a stop valve V-3, a mixing portion that is further downstream to a stop valve V-6, and a microsphere dispersing portion that is further downstream and contains a poor solvent for expanding rapidly and dispersing microspheres. Herein, the present invention will be described based on Fig. 1 by taking as an example a case using carbon dioxide as the supercritical fluid, ethanol as the entrainer, polylactic acid as the high-molecular material, and water as the poor solvent.

The pressure rising portion is provided with a cylinder 1 for supplying the supercritical fluid (carbon dioxide), a tank 4 for supplying the entrainer (ethanol), respective pressure-rising pumps 5A and 5B, and an agitating cell 9 for mixing the supercritical fluid and the entrainer. When the supercritical fluid is not previously mixed with the entrainer, it is not necessary to provide the tank 4 system.

A drying pipe 2, a filter 3A, a cooling unit 13, and a filter 3B are provided between the cylinder 1 in which liquid carbon dioxide is filled and the pressure-rising pump 5A.

The drying pipe 2 is filled with a desiccant, and moisture in the liquid carbon dioxide is removed while the liquid carbon dioxide from the cylinder 1 is passing through the drying pipe 2. In the example described below, a carrier gas drying pipe (Gas Driers; material: SUS316, the maximum use pressure: 20 MPa, inner diameter: 35.5 mm; length: 310 mm) manufactured by GL Science Inc. was used as the drying pipe 2, and a molecular sieve (1/16 inch pellet) manufactured by GL Science Inc. was used as the desiccant.

The cooling unit 13 is filled with ethylene glycol, for example, and is constituted such that this ethylene glycol is cooled to about 260 K. The liquid carbon dioxide in which moisture is removed by the desiccant is cooled by the ethylene glycol and is supplied to the pressure-rising pump 5A. In the example described below, BL-22 manufactured by Yamato Scientific Co., Ltd. was used as the cooling unit 13.

Filters 3A and 3B are provided before and after the cooling unit 13. These filters remove impurities such as dust so that the contaminants are prevented from entering the pressure-rising pump 5A. In the example described below, a filter with an average pore size of about 10 µm (FT4-10 manufactured by GL Science Inc.) was used as the filters.

As the pressure-rising pump 5A, a high pressure single plunger pump APS-5L manufactured by GL Science Inc. (the maximum pressure: 58.8 MPa, normal pressure: 49.0 MPa, flow rate: 0.5 to 5.2 ml/min) was used. A cooler is provided in the head portion of the pressure-rising pump 5A in order to prevent vaporization of the liquid carbon dioxide.

Furthermore, a pressure-regulating valve V-1 is provided in the pressure-rising portion, and this pressure-regulating valve V-1 sets the pressure in the system of the pressure-rising portion and the mixing portion to an arbitrary pressure. In the example described below, as the pressure-regulating valve V-1, 26-1721-24 manufactured by TESCOM Corporation was used. The pressure-regulating valve V-1 can control the pressure in the system at a precision within ± 0.1 MPa, and the maximum use pressure is 41.5 MPa.

The pressure-rising portion is provided with a pressure gauge 6A, which measures the pressure in the system. The pressure gauge 6A is provided with an upper limit contact output terminal, and is set such that the power of the pressure-rising pump 5A is turned off at a specified pressure. In the example described below, a Bourdon pressure gauge LCG-350 (the maximum use pressure: 34.3 MPa) manufactured by GL Science Inc. was used as the pressure gauge 6A. Economy Pressure Gauge PE-33-A (strain gauge, precision ± 0.3%) manufactured by Sokken Co., Ltd. was used to calibrate the pressure gauge 6A.

On the other hand, the pressure-rising pump 5B, a check valve 8 and a stop valve V-2 are provided between the entrainer tank 4 and the agitating cell 9. The entrainer (ethanol) filled in the entrainer tank 4 passes through the check valve 8 by the pressure-rising pump 5B and is supplied to the agitating cell 9, and then is mixed with the carbon dioxide supplied from the cylinder 1. Alternatively, the entrainer may be supplied to a high pressure cell 15 of the mixing portion, which will be described later, together with the high-molecular material. The agitating cell 9 is provided inside a thermostatic chamber 11, and the carbon dioxide and the entrainer (ethanol) in the agitating cell 9 are agitated by an agitator 10. In the example below, as the check valve, SS-53F4 (the maximum use pressure: 34.3 MPa) manufactured by AKICO Corporation was used, and a quick openable extraction cell (material: SUS316, design pressure: 39.2 MPa (400 kg/cm²), design temperature 423.15 K (150°C), inner diameter: 55 mm, height: 110 mm, inner volume: 250 ml) manufactured by AKICO Corporation was used as the agitating cell 9. For the thermostatic chamber 11, the water temperature was controlled within ±0.1°C by a temperature controller DB1000 of CHINO corporation, and a platinum resistance thermometer 1TPF483 manufactured by CHINO corporation was used as a temperature-measuring portion 12.

A stop valve V-3 is provided between the pressure-rising portion and the mixing portion, and the flow of the fluid to the mixing portion can be controlled by the stop valve V-3. In the example described below, 2Way Valve 02-0120 (the maximum use pressure: 98.0 MPa) manufactured by GL Science Inc. was used as the stop valve V-3.

A safety valve 7A may be provided between the pressure-rising portion and the mixing portion in order to ensure safety. In the example described below, a spring safety valve manufactured by NUPRO was used as the safety valve 7A, and a stainless steel pipe was used as the pipe.

Next, the mixing portion is provided with mainly a water thermostatic chamber 18, and a preheating column 14 and a high pressure cell 15, which are provided in the chamber.

The water thermostatic chamber 18 controls the temperature of the high pressure cell 15 provided therein. In the example described below, the water temperature is controlled within ± 0.1°C by a temperature controller DB1000 of CHINO corporation, and a platinum resistance thermometer 1TPF483 manufactured by CHINO corporation was used as a temperature-measuring portion 17.

The mixture of the liquid carbon dioxide and the ethanol supplied from the pressure-rising portion is sent to the preheating column 14. This mixture is then introduced to the high pressure cell 15 by regulating the stop valves V-4 and V-5.

The high-molecular material (polylactic acid) and the core substance and/or a small amount of entrainer, if necessary, are charged into the high pressure cell 15 in advance. A variable speed motor 16 for agitation is provided to agitate polylactic acid in the high pressure cell 15 and the introduced mixture of carbon dioxide and ethanol. The agitating speed is preferably 20 to 300 rpm, and the rotation speed of the agitating shaft can be displayed by a digital rotation display meter. Furthermore, a pressure gauge 6B is provided to measure the pressure in the high pressure cell 15. In the example described below, a quick openable extraction cell (material: SUS316, design pressure: 39.2 MPa (400 kg/cm²), design temperature 423.15 K (150°C), inner diameter: 55 mm, height: 220 mm, inner volume: 500 ml) manufactured by AKICO Corporation was used as the high pressure cell 15. The variable speed motor 16 for agitation and the agitating blade in the high pressure cell 15 are connected with an electromagnetic non-seal agitator (material: SUS316). A Bourdon pressure gauge E93004 (the maximum pressure: 49.0 MPa) manufactured by Yamazaki Keiki Seisakusho was used as the pressure gauge 6B. For calibration of this pressure gauge, Economy Pressure Gauge PE-33-A (strain gauge, precision ± 0.3%FS, FS: kgf/cm²) manufactured by Sokken Co., Ltd. was used. Furthermore, a platinum resistance thermometer manufactured by CHINO corporation was used as a temperature-measuring portion 17.

A safety valve 7B may be provided above the high pressure cell 15 for the purpose of preventing the cell 15 from explosion due to the pressure rise in the high pressure cell 15. For the safety valve 7B, a spring safety valve (177-R3AKI-G) manufactured by NUPRO was used.

The microsphere dispersing portion continuing to the mixing portion is provided with a poor solvent cell 21 containing a poor solvent and pressure buffering cell 22 in an air thermostatic chamber 23.

The high pressure fluid in which the high-molecular material (polylactic acid) is dissolved passes through a protective pipe 19 and sprayed into the poor solvent cell 21 containing a poor solvent (water) provided in an air thermostatic chamber 23 from a nozzle 20 so that the microspheres are dispersed in the poor solvent. The extra pressure generated in the poor solvent cell 21 can be buffered by a pressure buffering cell 22 that is in communication therewith via a stop valve V-7. The poor solvent cell 21 and the pressure buffering cell 22 have heaters to adjust the temperature in the rapid expansion of the high-molecular substance-containing fluid sprayed into the poor solvent. The protective pipe 19 and the nozzle 20 also have heaters to prevent the sample from condensation due to pressure reduction and occurrence of dry ice due to the supercritical fluid (carbon dioxide). In the example described below, for the poor solvent cell 21 and the pressure buffering cell 22, cells (SUS316, design pressure: 34.3 MPa, design temperature: 373.15 K (100°C), inner diameter: 45 mm, height: 161.5 mm, and inner volume: 250 ml) manufactured by GL Science Inc., was used. As the protective pipe 19, a 1/8 inch stainless steel pipe (SUS316, outer diameter 3.175 mm, inner diameter 2.17 mm, and length about 1 m) was used. The inner volume of the air thermostatic chamber 23 is 125 dm³, and the temperature in the thermostatic chamber is controlled within ±0.05°C by a temperature regulator DB1000 manufactured by CHINO corporation. As the nozzle 20, a unijet nozzle (orifice diameter: 0.28 mm, the maximum use pressure: 280 kg/cm²) manufactured by Spraying Systems Co., Japan was used.

When the high-molecular substance solution is rapidly expanded in the cell 21, the high-molecular substance is precipitated in the poor solvent in the cell 21, and is formed into microspheres. After the pressure in the cell 21 is reduced by opening the valve V-7, and then the cells 21 and 22 are opened and the poor solvent in which the high-molecular weight microspheres are dispersed is taken out. By removing the poor solvent by drying under reduced pressure, only the high-molecular weight microspheres can be collected.

The present invention will be described more specifically by way of example below, but the present invention is not limited thereto.

### Example

### (Example 1)

Using the above-described apparatus, microspheres of polylactic acid were produced.

First, 5 g of polylactic acid (molecular weight 10000) and 200 ml of ethanol as the entrainer were placed in the high pressure cell 15, and water as the poor solvent was filled in the poor solvent cell 21 in advance, and then the cells 15 and 21 were provided in the respective predetermined positions.

Then, carbon dioxide was supplied from the cylinder 1 while the valve V-2 was closed. The upper limit pressure of the carbon dioxide was regulated by the pressure-regulating valve V-1, the temperature in the water thermostatic chamber 18 was regulated to 313.15 ± 0.2 K by the temperature regulator described above, and the temperature in the protective pipe was regulated to 350.15 ± 0.5 K. Then, while all the valves (V-4, V-5 and V-6) in the mixing portion were closed, the valve V-3 was opened so that the carbon dioxide was supplied to the mixing portion. The valve V-5 was opened and kept opened until the pressure reached a predetermined pressure (25 MPa) in the high pressure cell 15. The inside of the high pressure cell 15 was agitated by the agitating motor 16. The rotation speed of the agitating shaft was adjusted by a digital rotation display meter, and the entire system was pressurized and adjusted to 25 MPa. After the pressure became constant, the inside of the high pressure cell 15 was agitated by the agitating motor 16 and was left for about 30 minutes.

Then, the valve V-6 was opened, and while reducing the pressure from 25 MPa to 20 MPa, polylactic acid that is dissolved in the high pressure fluid containing carbon dioxide and ethanol was rapidly sprayed into the cell 21 containing the poor solvent by the nozzle 20 and dispersed therein. At the same time, the valve V-7 was opened to buffer the pressure by the pressure-buffering cell 22, and then polylactic acid microspheres were collected together with water, which was the poor solvent.

The obtained microspheres were observed through a scanning electron microscope (SEM-EDX) SSX-550 manufactured by Shimadzu Corporation. The scanning electron microphotograph of the polylactic acid microspheres is shown in Fig. 2. As seen from Fig. 2, microspheres having a uniform average particle size were obtained.

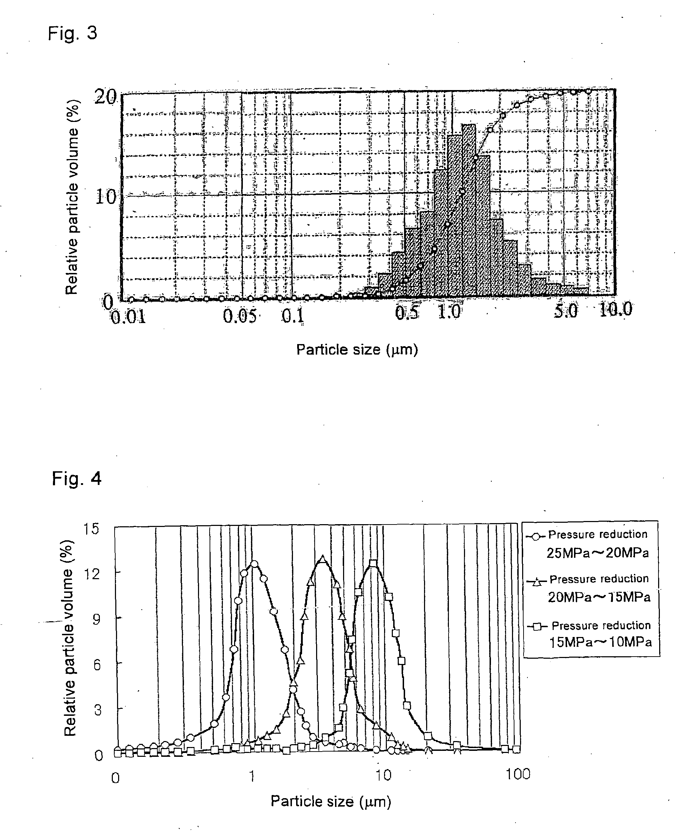

Furthermore, the particle size distribution was measured by a laser diffraction particle size analyzer (SALD-2000 manufactured by Shimadzu Corporation. The results are shown in Fig. 3. In Fig. 3, the columns show the relative ratio (volume %) of the particle corresponding to each size and the solid line shows the cumulative percentage thereof. From Fig. 3, it is evident that there is no deviation in the distribution.

### (Example 2)

Microspheres were produced in the same manner as in Example 1, except that the pressure reduction condition was varied. More specifically, the valve V-6 was opened and while the pressure in the cell was reduced from 25 MPa to 20 MPa, as shown in Example 1, from 20 MPa to 15 MPa and from 15 MPa to 10 MPa, and rapid expansion by spraying into the poor solvent was performed, and then microspheres were collected. The particle size distribution of the poor solvent containing the microspheres was measured with a laser diffraction particle size analyzer (SALD-2000 manufactured by Shimadzu Corporation). The results are shown in Fig. 4.

As seen from Fig. 4, the average particle size can be controlled by varying the pressure reduction condition.

### (Example 3)

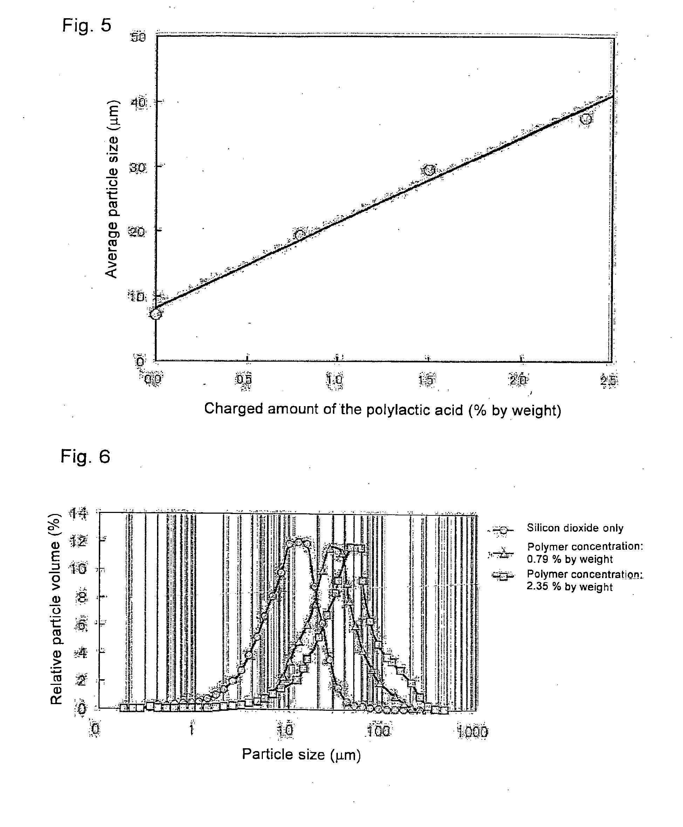

The particle size distribution of the microspheres was measured in the same manner as in Example 1 except that the amount of polylactic acid charged was varied. The results are shown in Fig. 5.

As seen from Fig. 5, when the pressure reduction condition is unvaried, polylactic acid microspheres having larger particle size can be obtained by charging a larger amount of high-molecular material, and thus the average particle size can be controlled.

### (Example 4)

Coated microspheres were produced in the same manner as in Example 1, except that silicon dioxide microspheres (average particle size: 10 µm), which are inorganic microspheres, were used, instead of polylactic acid, as the core substance, and 5 to 50 g of polyethylene glycol (molecular weight: 7500) was used as the high-molecular material for coating. The relationship between the average particle size of the thus-obtained coated microspheres and the amount of the polyethylene glycol charged are shown in Fig. 6. This graph shows that when the pressure reduction condition is unvaried, the average particle size of the microspheres can be controlled by controlling the amount of the high-molecular material.

### (Example 5)

Polylactic acid microspheres were produced in the same manner as in Example 1, except that methanol, ethanol, propanol and acetone were respectively used as the poor solvent. As a result, it was confirmed that the average particle size of the thus-obtained microspheres could be controlled also when methanol, ethanol, propanol and acetone were used (data are not shown).

### (Example 6)

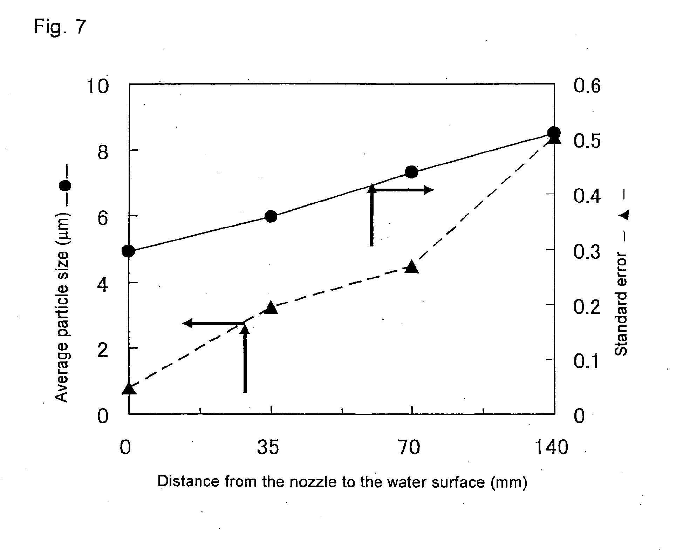

Microspheres were produced and the particle size distribution was measured in the same manner as in Example 1, except that the distance from the tip of the nozzle 20 to the water surface of water charged in the poor solvent cell 21 was varied. The results are shown in Fig. 7. Fig. 7 shows that the average particle size can be controlled by controlling the distance from the nozzle to the water surface.

### Industrial Applicability

According to the present invention, high-molecular weight microspheres having good dispersibility can be produced stably. According to the method of the present invention, the average particle size of high-molecular weight microspheres produced and the thickness of high-molecular coating to the microspheres can be controlled quantitatively. Therefore, the high-molecular weight microspheres obtained by the method of the present invention, which is a more functional material, can be used for food, pharmaceuticals, cosmetics, microimage elements, toner, coatings, catalyst carriers, carriers for a filler of a separation column of liquid chromatography or the like.

## Claims

1. A method for producing high-molecular weight microspheres comprising:
dissolving or dispersing a high-molecular material in a high pressure fluid containing a supercritical fluid and an entrainer, and
spraying the resultant high pressure fluid into a poor solvent to cause rapid expansion.

2. The method of claim 1, wherein the poor solvent is at least one selected from the group consisting of water, methanol, ethanol, propanol, acetone, liquid nitrogen and a mixture thereof.

3. The method of claim 1 or 2, wherein the supercritical fluid is selected from the group consisting of carbon dioxide, ammonia, methane, ethane, ethylene and butane.

4. The method of any of claims 1 to 3, wherein the entrainer is an organic solvent that is liquid at ordinary temperature.

5. The method of any of claims 1 to 4, wherein in the dissolving or dispersing step, at least one of the pressure of the high pressure fluid, the temperature of the high pressure fluid, the amount of the entrainer and the amount of the high-molecular material is controlled.

6. The method of any of claims 1 to 5, wherein in the rapid expansion step, at least one of the pressure, the temperature, and the type of the poor solvent is controlled.

7. The method of any of claims 1 to 6, wherein in the dissolving or dispersing step, a core substance is further dissolved or dispersed.

8. The method of any of claims 1 to 7, wherein the high-molecular weight microspheres are spherical.

9. The method of any of claims 1 to 8, wherein in the rapid expansion step, the entrainer is efficiently removed from the surface of the high-molecular weight microspheres.
